# EUROPÄISCHE PATENTANMELDUNG

(11) **EP 4 607 456 A1**
(43) Veröffentlichungstag der Anmeldung: **27.08.2025**
(21) Anmeldenummer: 24159107.2
(22) Anmeldetag: 22.02.2024
(51) Int. Cl.: G06T 7/00

(54) **COMPUTER-IMPLEMENTIERTES VERFAHREN UND VORRICHTUNG ZUR VISUELLEN INSPEKTION EINES PRODUKTS**

(71) Anmelder: Siemens Aktiengesellschaft, 80333 München (DE)
(72) Erfinder: Schall, Daniel, 2020 Hollabrunn (AT); Sündermann, Axel, 1220 Wien (AT)
(74) Vertreter: Siemens Patent Attorneys

(57) **Zusammenfassung**

Computer-implementiertes Verfahren zur visuellen Inspektion eines Produkts mit einer Inspektions-Vorrichtung, umfassend ein Erfassungs-Mittel und einen Prozessor mit einem Speicher, wobei folgende Schritte ausgeführt werden:
a) Bereitstellen von zumindest einer ersten Datenstruktur mit ersten Bilddaten, welche zumindest ein erstes Kennzeichen für Bilddaten zur Verarbeitung durch ein Modell auf Basis künstlicher Intelligenz umfasst,
b) Bereitstellen eines Gründungs-Modells auf Basis künstlicher Intelligenz, umfassend eine Gründungs-Kennzeichen-Maske, welche das Gründungs-Modell zur Verarbeitung durch ein Modell auf Basis künstlicher Intelligenz beschreibt, und durch ein neuronales Netz gebildet ist, und die Gründungs-Kennzeichen-Maske Vorrichtungs-Daten umfasst, welche die Inspektions-Vorrichtung und/oder Eigenschaften der Inspektions-Vorrichtung beschreiben,
c) Anwenden der Bilddaten der zumindest einen ersten Datenstruktur auf das Gründungs-Modell mithilfe des zumindest einen ersten Kennzeichens und der Gründungs-Kennzeichen-Maske,
d) Bereitstellen einer zweiten Datenstruktur mit einem Erkennungs-Ziel, welches ein Herstellungs-Modell mit Herstellungs-Daten umfasst, welche das Produkt und/oder die Herstellung des Produkts während eines Modell-Trainings beschreiben,
e) Erzeugen und Trainieren eines Inspektions-Modells auf Basis künstlicher Intelligenz mit den Bilddaten der zumindest einen ersten Datenstruktur unter Anwendung der Gründungs-Kennzeichen-Maske und der zweiten Datenstruktur,
f) Bereitstellen von zumindest einer dritten Datenstruktur mit dritten Bilddaten, welche keine Bild-Kennzeichen aufweisen,
g) Anwenden des Inspektions-Modells auf die Bilddaten der zumindest einen dritten Datenstruktur und Feststellen, ob das Erkennungs-Ziel erreicht ist, indem das Herstellungs-Modell für das Produkt ausgewertet wird.

## Beschreibung

Die Erfindung betrifft ein Computer-implementiertes Verfahren und eine Vorrichtung zur visuellen Inspektion eines Produkts mit einer Inspektions-Vorrichtung.

Die Erfindung betrifft ferner ein Computer-Programm-Produkt, ein computerlesbares Speichermedium, einen computerlesbaren Datenträger und ein Datenträgersignal.

Bei einer visuellen Inspektion von hergestellten Produkten im industriellen Umfeld (engl. "visual quality inspection", kurz "VQI") kann man heutzutage bei einer KI-basierten Inspektion (künstliche Intelligenz, kurz "Kl") mit überwachtem Lernen sehr rasch an die Grenzen hinsichtlich des benötigten Aufwands stoßen.

In der Praxis kann man stark auf gekennzeichnete Daten für das Training angewiesen sein, deren Beschaffung häufig zeitaufwändig und kostspielig ist.

Darüber hinaus kann es beispielsweise zu Abweichungen der realen Bedingungen in der Herstellung kommen, welche in den Trainingsdaten nicht vorhanden waren und zu Ungenauigkeiten bei der Identifizierung von Fehlern führen kann.

Die benötigte Zeit und der Aufwand zum Erstellen eines gekennzeichneten beziehungsweise beschrifteten Datensatzes (engl. "label") kann erheblich variieren, beispielsweise abhängig von der Komplexität der Aufgabe, der Größe des Datensatzes, oder dem für die Annotation erforderlichen Fachwissen.

Der Aufwand für die Annotation kann höchst unterschiedlich sein, in einigen Fällen einige Stunden dauern, für komplexere Aufgaben aber auch Wochen oder sogar Monate benötigen.

Es ist daher wichtig, ausreichend Zeit für eine Datenkennzeichnung einzuplanen und einzuplanen, da sie sich jedoch direkt auf die Qualität und Effektivität des KI-Modells auswirkt und unerwünscht ist.

Andererseits können erhebliche Ressourcen notwendig sein, was die Systemkomplexität ungünstig beeinflusst und ebenfalls unerwünscht ist.

Ein manuelles Erstellen von beschrifteten Datensätzen für KI-Modelle kann die Skalierbarkeit aus mehreren Gründen beeinträchtigen.

Erstens kann der Prozess oft zeitaufwändig und ressourcenintensiv sein, insbesondere wenn die Größe des Datensatzes zunimmt, und den gesamten Entwicklungs- und Bereitstellungszeitplan verlangsamen kann.

Zweitens ist die manuelle Beschriftung für große Anwendungen oder bei kontinuierlichem Datenfluss möglicherweise nicht praktikabel.

Der Bedarf an menschlichen Annotatoren kann zu einem unerwünschten Engpass führen, der es schwierig macht, sich schnell an sich ändernde Anforderungen anzupassen oder eine erhöhte Arbeitsbelastung zu bewältigen.

Im Stand der Technik sind verschiedene Werkzeuge bekannt, welche die manuelle Beschriftung bei Aufgaben des überwachten Lernens unterstützen.

"Labelbox" ist eine Plattform, die Werkzeuge für die Datenkennzeichnung bereitstellt, einschließlich Bildanmerkungen, Videoanmerkungen und mehr. Es unterstützt dabei die Zusammenarbeit zwischen Kommentatoren und lässt sich in "Pipelines" für maschinelles Lernen integrieren.

"Cognex" bietet eine Reihe von Bildverarbeitungs-Softwaretools für die Qualitätsprüfung und Fehlererkennung. Es wird häufig in industriellen Umgebungen für Aufgaben wie Oberflächeninspektion, Montageprüfung und Barcode-Lesen verwendet.

"MVTec HALCON" ist eine umfassende Softwarebibliothek für die industrielle Bildverarbeitung, welche Werkzeuge für die Bildanalyse, Fehlererkennung und Klassifizierung in industriellen Anwendungen bietet.

"Matrox Imaging Library" ist eine Bibliothek mit Software-Tools für die Entwicklung von Bildanalyseanwendungen, welche in Branchen wie der Fertigung zur automatisierten Inspektion und Qualitätskontrolle eingesetzt wird.

Diese Werkzeuge und Plattformen zielen darauf ab, den Bildbeschriftungsprozess zu rationalisieren, den manuellen Aufwand zu reduzieren und die Effizienz visueller Inspektionsaufgaben zu verbessern.

Sie können in Szenarien nützlich sein, in denen große Datasets mit Anmerkungen versehen werden müssen und für sich wiederholende Aufgaben eine Automatisierung erforderlich ist.

Neuartige Ansätze wenden den sogenannten "Vision Transformer" (ViT) an.

Der Vision Transformer ist ein Ansatz für Computer Vision, der die Transformer-Architektur, die ursprünglich für die Verarbeitung natürlicher Sprache entwickelt wurde, auf Bilddaten anwendet. Es behandelt Bilder als Sequenzen von Patches und wandelt sie in ein Format um, das für transformatorbasierte Modelle geeignet ist. Transformer-Architekturen nutzen ein Schlüsselmerkmal namens "Self-Attention"-Mechanismen in der Transformer-Architektur, um langfristige Abhängigkeiten und Beziehungen zwischen Patches zu erfassen.

Der ViT zeigt eine starke Skalierbarkeit auf größere Datensätze und erzielt eine wettbewerbsfähige Leistung bei Bildklassifizierungsaufgaben und die Transformer-Architektur bietet Flexibilität bei der Erfassung sowohl lokaler als auch globaler Kontextinformationen. Vortrainierte ViT-Modelle auf großen Datensätzen können für bestimmte Computer-Vision-Aufgaben fein abgestimmt werden und bieten eine übertragbare Wissensbasis.

Eine Anwendung ist beispielsweise die Bildklassifizierung, wobei ViT erfolgreich bei Bildklassifizierungsaufgaben eingesetzt wurde und bei Benchmarks wie ImageNet Ergebnisse auf dem neuesten Stand der Technik erzielte.

Eine weitere Anwendung ist beispielsweise die Objekterkennung, bei welcher Varianten von ViT auf Objekterkennungsaufgaben ausgeweitet wurden, die sowohl bei der Bildklassifizierung als auch bei der Lokalisierung Effektivität zeigten.

Eine weitere Anwendung ist beispielsweise die Semantische Segmentierung, bei welcher ViTbasierte Modelle für semantische Segmentierungsaufgaben angepasst wurden, was die Vielseitigkeit des Ansatzes zeigt.

Jedoch liegen auch Begrenzungen von ViT vor, wie ein hoher Rechenaufwand, denn das Training großer ViT-Modelle kann sehr rechenintensiv sein, insbesondere wenn es sich um hochauflösende Bilder oder umfangreiche Datensätze handelt.

Außerdem ist der Umgang mit räumlichen Informationen eingeschränkt, denn während ViT sich durch die Erfassung globaler Beziehungen auszeichnet, kann es aufgrund der patch-basierten Darstellung auf Herausforderungen bei der Verarbeitung feinkörniger räumlicher Informationen stoßen.

Es ist Aufgabe der Erfindung die genannten Nachteile zu überwinden und eine verbesserte Lösung zur visuellen Produkt-Inspektion bereitzustellen.

Die Aufgabe wird durch ein Computer-implementiertes Verfahren zur visuellen Inspektion eines Produkts mit einer Inspektions-Vorrichtung gelöst, umfassend ein Erfassungs-Mittel und einen Prozessor mit einem Speicher, wobei folgende Schritte ausgeführt werden:
a) Bereitstellen von zumindest einer ersten Datenstruktur mit ersten Bilddaten, welche zumindest ein erstes Kennzeichen für Bilddaten zur Verarbeitung durch ein Modell auf Basis künstlicher Intelligenz umfasst,
b) Bereitstellen eines Gründungs-Modells auf Basis künstlicher Intelligenz, umfassend eine Gründungs-Kennzeichen-Maske, welche das Gründungs-Modell zur Verarbeitung durch ein Modell auf Basis künstlicher Intelligenz beschreibt, und durch ein neuronales Netz gebildet ist, und die Gründungs-Kennzeichen-Maske Vorrichtungs-Daten umfasst, welche die Inspektions-Vorrichtung und/oder Eigenschaften der Inspektions-Vorrichtung beschreiben,
c) Anwenden der Bilddaten der zumindest einen ersten Datenstruktur auf das Gründungs-Modell mithilfe des zumindest einen ersten Kennzeichens und der Gründungs-Kennzeichen-Maske,
d) Bereitstellen einer zweiten Datenstruktur mit einem Erkennungs-Ziel, welches ein Herstellungs-Modell mit Herstellungs-Daten umfasst, welche das Produkt und/oder die Herstellung des Produkts während eines Modell-Trainings beschreiben,
e) Erzeugen und Trainieren eines Inspektions-Modells auf Basis künstlicher Intelligenz mit den Bilddaten der zumindest einen ersten Datenstruktur unter Anwendung der Gründungs-Kennzeichen-Maske und der zweiten Datenstruktur,
f) Bereitstellen von zumindest einer dritten Datenstruktur mit dritten Bilddaten, welche keine Bild-Kennzeichen aufweisen,
g) Anwenden des Inspektions-Modells auf die Bilddaten der zumindest einen dritten Datenstruktur, und Feststellen, ob das Erkennungs-Ziel erreicht ist, indem das Herstellungs-Modell für das Produkt ausgewertet wird.

Durch eine geeignete Verwendung und vorteilhafte Anpassung eines Gründungs-Modells (engl. "foundation model") auf Basis künstlicher Intelligenz kann auf einfache Weise ein genaues Erkennungs-Ziel für eine visuelle Inspektion eines Produkts erreicht werden.

Gründungs-Modelle, oder auch Grund-Modelle oder Basis-Modelle, sind Computer-Modelle auf dem Gebiet der künstlichen Intelligenz, welches durch maschinelles Lernen für eine bestimmte Anwendung trainiert ist, und zumeist durch ein künstliches neuronales Netz gebildet ist.

Ein Gründungs-Modell ist ein maschinelles Lernmodell, das auf einer großen Menge von Daten derart trainiert wird, dass es auf eine Vielzahl von nachgelagerten Aufgaben angepasst werden kann, wobei häufig selbstüberwachtes Lernen oder halbüberwachtes Lernen zur Anwendung kommt.

Gründungs-Modelle kommen häufig bei großen Sprach-Modellen (engl. "large language model", kurz "LLM") zu Anwendung, sind aber auch für VQI-Anwendungen anwendbar, da dabei große Trainings-Datensätze erzeugt werden können.

Gründungs-Modelle haben dazu beigetragen, KI-Systeme neuartig zu konzipieren, wie z. B. durch die Bereitstellung von Chatbots und anderen nutzerorientierten KI-Anwendungen.

Ein Inspektions-System kann zentral ein genaues Modell erzeugen und dezentral durch einen technisch einfachen Inspektions-Klienten eine genaue Inferenz-Analyse durchführen.

Das Trainieren des Inspektions-Modells kann auf Basis von automatisch gekennzeichneten Daten (engl. "auto-labeled data") und unter Anwendung von Daten bezüglich von Prozess-Anforderungen, Vorrichtungs-Grenzen und Modell-Leistungsgrenzen erfolgen.

Die Prozess-Anforderungen betreffen Daten zur Herstellung des Produkts, beispielweise zu Prozessen, Prozessschritten oder Prozessparametern.

Die Vorrichtungs-Grenzen betreffen Daten zu Herstellungs-Vorrichtungen für das Produkt, beispielweise Stromverbrauch.

Die Modell-Leistungsgrenzen betreffen Daten zu Leistungsbegrenzungen bei der Herstellung des Produkts.

Es ist bevorzugt vorgesehen, dass das Erzeugen und Trainieren eines Inspektions-Modells im Schritt e) durch einen Server ausgeführt wird, und das Anwenden des Inspektions-Modells auf die Bilddaten im Schritt g) durch einen mit dem Server verbundenen Klienten, welcher die Inspektions-Vorrichtung zur visuellen Inspektion eines Produkts darstellt.

In einer Weiterbildung der Erfindung ist es vorgesehen, dass das Inspektions-Modell in einer mit dem Prozessor verbundenen Server-Vorrichtung erzeugt, trainiert und gespeichert wird.

Der föderierte KI-Ansatz kann dazu angewendet werden, um mehrere Inspektions-Vorhaben von Produkten an verschiedenen Klienten durchzuführen, und dementsprechend ein Inspektions-System zu bilden.

In einer Weiterbildung der Erfindung ist es vorgesehen, dass das Inspektions-Modell mit Versions-Informationen, welche während des Trainings erzeugt werden, gespeichert wird.

Die Versions-Informationen können vorteilhaft dazu verwendet werden, um auf einfache Weise ein Nachverfolgbarkeit oder Reproduzierbarkeit bei der Herstellung des Produkts bereitzustellen.

In einer Weiterbildung der Erfindung ist es vorgesehen, dass die zumindest eine dritte Datenstruktur in einer mit dem Prozessor verbundenen Server-Vorrichtung gespeichert wird.

Dadurch kann die Systemkomplexität des Inspektions-Systems geringgehalten werden.

In einer Weiterbildung der Erfindung ist es vorgesehen, dass das neuronale Netz der Gründungs-Kennzeichen-Maske aus einer Lage oder zwei Lagen besteht.

Die Gründungs- (oder Grund-/Basis-) Kennzeichen-Maske kann beispielsweise mithilfe von entsprechenden Trainings-Daten, welche das jeweilige Kennzeichen beschreiben oder in Form von entsprechenden Bilddaten zeigen, erzeugt, trainiert und angewandt werden.

Auch für Trainings-Datensätze zur Erzeugung der Gründungs-Kennzeichen-Maske kann beispielsweise selbstüberwachtes Lernen oder halbüberwachtes Lernen zur Anwendung kommen.

Die erfindungsgemäße Aufgabe wird auch durch eine Inspektions-Vorrichtung zur visuellen Inspektion eines Produkts gelöst, umfassend einen Prozessor und einen Speicher, wobei die Vorrichtung dazu eingerichtet ist, das erfindungsgemäße Verfahren auszuführen.

In einer Weiterbildung der Erfindung ist es vorgesehen, dass ferner ein Erfassungs-Mittel umfasst ist, welches dazu eingerichtet ist, Bilddaten des Produkts für die zumindest eine dritte Datenstruktur bereitzustellen.

In einer Weiterbildung der Erfindung ist es vorgesehen, dass das Erfassungs-Mittel ein bildgebender Kamera-Sensor ist.

Die erfindungsgemäße Aufgabe wird auch durch ein Computer-Programm-Produkt gelöst, umfassend Befehle, die bei der Ausführung des Programms durch einen Computer diesen veranlassen, das erfindungsgemäße Verfahren oder Verfahrens-Schritte auszuführen.

Die erfindungsgemäße Aufgabe wird auch durch ein computerlesbares Speichermedium oder computerlesbarer Datenträger gelöst, umfassend Befehle, die bei der Ausführung durch einen Computer diesen veranlassen, das erfindungsgemäße Verfahren oder Verfahrens-Schritte auszuführen.

Die erfindungsgemäße Aufgabe wird auch durch einen computerlesbaren Datenträger gelöst, auf dem das erfindungsgemäße Computer-Programm-Produkt gespeichert ist.

Die erfindungsgemäße Aufgabe wird auch durch ein Datenträgersignal gelöst, das das erfindungsgemäße Computer-Programm-Produkt überträgt.

Die Erfindung wird durch ein Ausführungsbeispiel anhand der angefügten Figuren näher erläutert. Die Figuren zeigen in
- **Fig. 1**: ein erstes Beispiel des erfindungsgemäßen Verfahrens in Form eines Fluss-Diagramms und eine schematische Darstellung eines erfindungsgemäßen Inspektions-Systems,
- **Fig. 2**: ein zweites Beispiel des erfindungsgemäßen Verfahrens in Form eines vereinfachten Fluss-Diagramms,

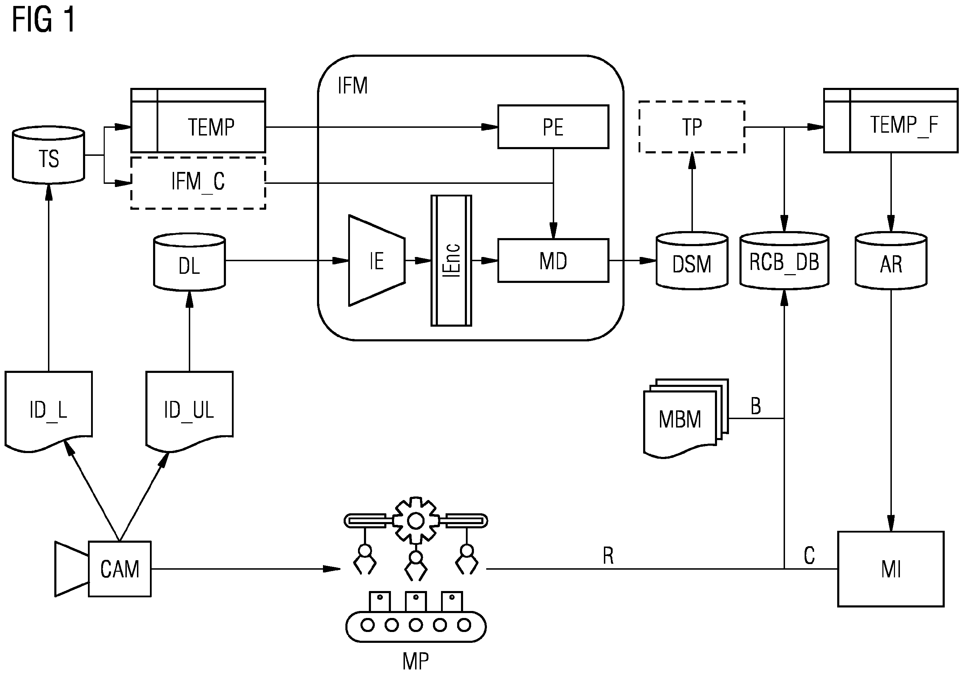

**Fig. 1** zeigt ein erstes Ausführungsbeispiel des erfindungsgemäßen Verfahrens zur visuellen Inspektion eines Produkts mit einer Inspektions-Vorrichtung in Form eines Fluss-Diagramms.

Es ist in der Figur der Datenfluss zwischen einzelnen Modulen eines Inspektions-Systems beziehungsweise einer Inspektions-Vorrichtung zur visuellen Inspektion eines Produkts vereinfacht dargestellt.

Zumindest ein Teil des Verfahrens ist in einen Computer implementiert.

Die Inspektions-Vorrichtung umfasst ein Erfassungs-Mittel in Form einer Kamera CAM, welche dazu eingerichtet ist, Bilddaten des Produkts bereitzustellen.

Es kann beispielsweise vorgesehen sein, dass durch eine Produktions-Vorrichtung für einen Herstellungs-Prozess MP hergestellte Produkte auf einem Förderband an der Kamera CAM vorbeigeführt und als jeweilige Bilddaten erfasst werden.

Die Inspektions-Vorrichtung soll nicht korrekte Produkte erkennen und aussortieren.

Die Kriterien für korrekte und nicht-korrekte Produkte werden in Form von entsprechenden Modellen auf Basis künstlicher Intelligenz beziehungsweise durch gekennzeichnete Bilddaten manuell festgelegt.

Ferner umfasst die Inspektions-Vorrichtung einen Server und einen Klienten, jeweils mit einem Prozessor und jeweils mit einem Speicher.

Durch den Klienten wird die Inspektions-Vorrichtung gebildet.

Der Server dient als zentrales Rechen- und Speicher-Vorrichtung und ist mit dem Klienten verbinden.

Es ist klar, dass mehrere Klienten den Server gemeinsam nutzen können, also das Modell zentral erzeugt wird und den einzelnen Klienten bereitgestellt wird.

Folgende Verfahrens-Schritte werden ausgeführt:
a) Bereitstellen von zumindest einer ersten Datenstruktur mit ersten Bilddaten ID_L, welche zumindest ein erstes Kennzeichen für Bilddaten zur Verarbeitung durch ein Modell auf Basis künstlicher Intelligenz umfasst.
   Dies kann beispielsweise so erfolgen, dass die Kamera CAM ein Bild eines hergestellten Produkts erfasst und eine Kennzeichnung von Kriterien zur positiven und/oder negativen Beurteilung des Bildes durch einen Experten manuell zugeordnet werden.
b) Bereitstellen eines Gründungs-Modells IFM auf Basis künstlicher Intelligenz, umfassend eine Gründungs-Kennzeichen-Maske, welche das Gründungs-Modell IFM zur Verarbeitung durch ein Modell auf Basis künstlicher Intelligenz beschreibt, und durch ein neuronales Netz gebildet ist, und die Gründungs-Kennzeichen-Maske Vorrichtungs-Daten umfasst, welche die Inspektions-Vorrichtung und/oder Eigenschaften der Inspektions-Vorrichtung beschreiben.

Das neuronale Netz des Masken-Decoders besteht vorzugsweise aus einer oder zwei Lagen, um die Komplexität der Lagen und damit die Berechnungsaufwände gering zu halten.

Vorzugsweise erfolgt die Anpassung beziehungsweise Bereitstellung der Maske mithilfe des sogenannten "zero learning" oder "one shot learning" durch den Masken-Decoder MD.

c) Anwenden der Bilddaten der zumindest einen ersten Datenstruktur auf das Gründungs-Modell IFM mithilfe des zumindest einen ersten Kennzeichens und der Gründungs-Kennzeichen-Maske.

Das zuvor gekennzeichnete Bild, das heißt ersten Bilddaten ID_L soll nun dazu dienen, das Gründungs-Modell IFM für die aktuelle Anwendung anzupassen.

d) Bereitstellen einer zweiten Datenstruktur mit einem Erkennungs-Ziel, welches ein Herstellungs-Modell mit Herstellungs-Daten umfasst, welche das Produkt und/oder die Herstellung des Produkts während eines Modell-Trainings beschreiben, durch einen sogenannten "prompt encoder" oder ein Erkennungs-Ziel-Modul PE.

Das Erkennungs-Ziel (engl. "prompt") führt und begleitet ein Modell während des Trainings und berücksichtigt Informationen zum Produkt und/oder dessen Herstellung.

Dieses Modell kann mit Versions-Informationen, welche während des Trainings erzeugt werden, in einem Artefakt Speicher AR gespeichert werden,

e) Erzeugen und Trainieren eines Inspektions-Modells auf Basis künstlicher Intelligenz mit den Bilddaten ID_L der zumindest einen ersten Datenstruktur unter Anwendung der Gründungs-Kennzeichen-Maske und der zweiten Datenstruktur.

Das Trainieren des Inspektions-Modells kann auf Basis von automatisch gekennzeichneten Daten und unter Anwendung von Daten bezüglich von Prozess-Anforderungen R, Vorrichtungs-Grenzen C und Modell-Leistungsgrenzen B erfolgen.

f) Bereitstellen von zumindest einer dritten Datenstruktur mit Bilddaten ID_UL, welche keine Bild-Kennzeichen aufweisen, und Speichern in einem Daten-Speicher DL.

g) Anwenden des Inspektions-Modells auf die Bilddaten ID_UL der zumindest einen dritten Datenstruktur, und Feststellen, ob das Erkennungs-Ziel erreicht ist, indem das Herstellungs-Modell für das Produkt ausgewertet wird.

Das Gründungs-Modell IFM kann anhand einer oder mehrerer Produktionsmaschinen erzeugt werden, wobei Bilder des Produkts erfasst und beispielsweise durch selbstüberwachtes Lernen trainiert werden können.

Die Gründungs-Kennzeichen-Maske kann mithilfe von Klassifizierung und manueller Bearbeitung erzeugt werden.

Die Kamera CAM erfasst zunächst Bilddaten vom Herstellungs-Prozess MP (engl. "manufacturing process") eines lokalen Klienten eines Klienten-Server-Systems, welcher zu inspizierende Produkte erzeugt.

Der Klient erfasst ferner Daten bezüglich Prozess-Anforderungen R, Vorrichtungs-Grenzen C und Modell-Leistungsgrenzen B der Vorrichtungen für den Herstellungs-Prozess MP, beispielsweise mithilfe eines Modell-Leistungs-Moduls MBM (engl. "model benchmark module"), kurz RCB-Daten, und speichert diese in einer RCB-Datenbank RCB_DB des Servers.

Die Bilddaten werden nachfolgend teilweise als erste Bilddaten ID_L gekennzeichnet, beispielsweise durch manuelle Analyse oder automatisch durch selbstüberwachtes Lernen.

Die gekennzeichneten ersten Bilddaten ID_L werden in einem Vorlagen-Speicher TS (engl. "template storage") auf dem Server des Klienten-Server-Systems gespeichert.

Aus diesen Daten werden Vorlagen TEMP und IFM-Anpassungen IFM_C des Gründungs-Modells IFM gebildet, beispielsweise durch Klassifizierung oder eine manuelle Selektion.

Die nicht-gekennzeichneten dritten Bilddaten ID_UL werden in einem Daten-Speicher DL gesichert.

Von dem Daten-Speicher DL erfolgt mithilfe eines Bild-Encoders IE (engl. "image encoder") eine Bild-Analyse, durch welche Bild-Einbettungen IEng (engl. "image embeddings") identifiziert und gebildet werden, welche wiederum von einem Masken-Decoder MD (engl. "mask decoder") unter Anwendung der IFM-Anpassung IFM_C verarbeitet werden, wobei das Erkennungs-Ziel-Modul PE die Vorlage TEMP verarbeitet und die erhaltenen Informationen ebenfalls dem Masken-Decoder MD bereitstellt.

Mit anderen Worten wird das Gründungs-Modell IFM durch die Module Bild-Encoder IE, Masken-Decoder MD und Erkennungs-Ziel-Modul PE anhand der nicht-gekennzeichneten dritten Bilddaten ID_UL und der Vorlagen TEMP und IFM-Anpassungen IFM_C erzeugt und trainiert.

Der Masken-Decoder MD erzeugt die Gründungs-Kennzeichen-Maske.

Ein Datensatz-Management DSM (engl. "dataset management") stellt, ausgehend vom Masken-Decoder MD, einer Trainings-Pipeline TP das Gründungs-Modell IFM sowie Masken-Informationen zur Ausführung des Verfahrensschrittes e) bereit.

Ausgehend von der Trainings-Pipeline TP wird nun eine endgültige Vorlage TEMP_F erzeugt, welche in einem Artefakt Speicher AR (engl. "artifact registry") am Server, sowie der RCB-Datenbank RCB_DB bereitgestellt.

Dadurch ist ein systemischer Abgleich der relevanten Parameter zwischen einer Vorlage und RCB-Daten möglich, und es kann dynamisch auf Prozessänderungen reagiert werden.

Ein Model-Inferenz-Modul Ml bestimmt am Klienten die Inferenz unter Verwendung der RCB-Daten und der zuvor bestimmten endgültigen Vorlage TEMP_F zur Feststellung, ob das jeweilige Erkennungs-Ziel für das aktuell zu untersuchende Produkt erreicht ist.

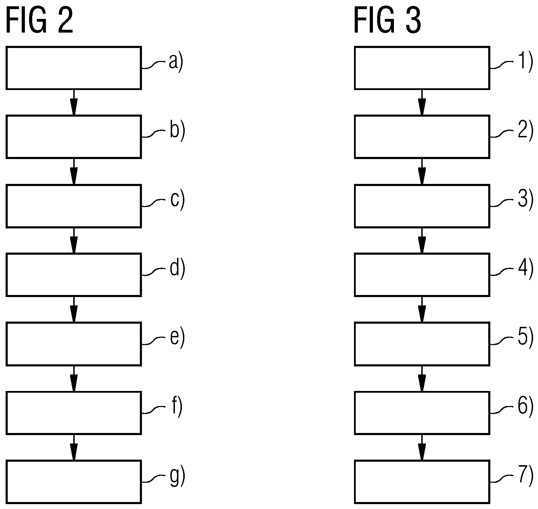

**Fig. 2** ein zweites Ausführungsbeispiel der Erfindung als Fluss-Diagramm in vereinfachter Form.
1) Bereitstellen der gekennzeichneten Bilddaten ID_L zu einem Vorlagen-Speicher TS,
2) Bereitstellen der nicht-gekennzeichneten Bilddaten ID_UL zum Daten-Speicher DL,
3) Anpassen der Maske durch Anwendung von "zero learning" oder "one shot learning" durch den Masken-Decoder MD,
4) Anpassen des Erkennungs-Ziels,
5) Trainieren des Inspektions-Modells auf Basis von automatisch gekennzeichneten Daten und unter Anwendung von Daten bezüglich von Prozess-Anforderungen R (engl. "process requirements"), Vorrichtungs-Grenzen C (engl. "constraints of unit") und Modell-Leistungsgrenzen B (engl. " model benchmarks") aus einer RCB-Datenbank RCB_DB,
6) Sichern des Inspektions-Modells in einem Artefakt-Speicher AR,
7) Verteilen des Inspektions-Modells an einen Klienten, an welchem die visuelle Inspektion des Produkts durchgeführt werden soll, und ausführen der Inspektion.

Die genannten Prozess-Anforderungen R betreffen Daten zur Herstellung des Produkts, beispielweise zu Prozessen, Prozessschritten oder Prozessparametern.

Die Vorrichtungs-Grenzen C betreffen Daten zu Herstellungs-Vorrichtungen für das Produkt, beispielweise Stromverbrauch.

Die Modell-Leistungsgrenzen B betreffen Daten zu Leistungsbegrenzungen bei der Herstellung des Produkts.

Die Daten R, C und B werden von der RCB-Datenbank RCB_DB nach der vorhergehenden Figur bereitgestellt.

*Unabhängig vom grammatikalischen Geschlecht eines bestimmten Begriffes sind Personen mit männlicher, weiblicher oder anderer Geschlechteridentität mit umfasst.*

### Bezugszeichenliste:

- AR: Artefakt Speicher (engl. "artifact registry")
- B: Modell-Leistungsgrenzen (engl. " model benchmarks")
- C: Vorrichtungs-Grenzen (engl. "constraints of unit")
- CAM: Kamera
- DL: Daten-Speicher (engl. "data lake")
- DSM: Datensatz-Management (engl. "dataset management")
- ID_L: gekennzeichnete Bilddaten (engl. "labeled image data)
- ID_UL: nicht-gekennzeichnete Bilddaten (engl. "unlabeled image data)
- IE: Bild-Encoder (engl. "image encoder")
- lEng: Bild-Einbettungen (engl. "image embeddings")
- IFM: industrielles Gründungs-Modell (engl. "industrial foundation model)
- IFM_C: IFM Anpassung
- MBM: Modell-Leistungs-Modul (engl. " model benchmark module")
- MD: Masken-Decoder (engl. "mask decoder")
- MI: Model-Inferenz
- MP: Herstellungs-Prozess (engl. "manufacturing process")
- PE: Erkennungs-Ziel (emgl. "prompt encoder")
- R: Prozess-Anforderungen (engl. "process requirements")
- RCB_DB: RCB-Datenbank
- TEMP: Vorlage
- TEMP_F: Endgültige Vorlage
- TP: Trainings-Pipeline
- TS: Vorlagen-Speicher (engl. "template storage")

## Patentansprüche

1. Computer-implementiertes Verfahren zur visuellen Inspektion eines Produkts mit einer Inspektions-Vorrichtung, umfassend ein Erfassungs-Mittel und einen Prozessor mit einem Speicher, wobei folgende Schritte ausgeführt werden:
a) Bereitstellen von zumindest einer ersten Datenstruktur mit ersten Bilddaten (ID_L), welche zumindest ein erstes Kennzeichen für Bilddaten zur Verarbeitung durch ein Modell auf Basis künstlicher Intelligenz umfasst,
b) Bereitstellen eines Gründungs-Modells (IFM) auf Basis künstlicher Intelligenz, umfassend eine Gründungs-Kennzeichen-Maske, welche das Gründungs-Modell (IFM) zur Verarbeitung durch ein Modell auf Basis künstlicher Intelligenz beschreibt, und durch ein neuronales Netz gebildet ist, und die Gründungs-Kennzeichen-Maske Vorrichtungs-Daten umfasst, welche die Inspektions-Vorrichtung und/oder Eigenschaften der Inspektions-Vorrichtung beschreiben,
c) Anwenden der Bilddaten der zumindest einen ersten Datenstruktur auf das Gründungs-Modell (IFM) mithilfe des zumindest einen ersten Kennzeichens und der Gründungs-Kennzeichen-Maske,
d) Bereitstellen einer zweiten Datenstruktur mit einem Erkennungs-Ziel, welches ein Herstellungs-Modell mit Herstellungs-Daten umfasst, welche das Produkt und/oder die Herstellung des Produkts während eines Modell-Trainings beschreiben,
e) Erzeugen und Trainieren eines Inspektions-Modells auf Basis künstlicher Intelligenz mit den Bilddaten (ID_L) der zumindest einen ersten Datenstruktur unter Anwendung der Gründungs-Kennzeichen-Maske und der zweiten Datenstruktur,
f) Bereitstellen von zumindest einer dritten Datenstruktur mit dritten Bilddaten (ID_UL), welche keine Bild-Kennzeichen aufweisen,
g) Anwenden des Inspektions-Modells auf die Bilddaten (ID_UL) der zumindest einen dritten Datenstruktur und Feststellen, ob das Erkennungs-Ziel erreicht ist, indem das Herstellungs-Modell für das Produkt ausgewertet wird.

2. Verfahren nach dem vorhergehenden Anspruch, wobei das Inspektions-Modell in einer mit dem Prozessor verbundenen Server-Vorrichtung erzeugt, trainiert und gespeichert wird.

3. Verfahren nach einem der vorhergehenden Ansprüche, wobei das Inspektions-Modell mit Versions-Informationen, welche während des Trainings erzeugt werden, gespeichert wird.

4. Verfahren nach einem der vorhergehenden Ansprüche, wobei die zumindest eine dritte Datenstruktur in einer mit dem Prozessor verbundenen Server-Vorrichtung gespeichert wird.

5. Verfahren nach einem der vorhergehenden Ansprüche, wobei das neuronale Netz der Gründungs-Kennzeichen-Maske aus einer Lage oder zwei Lagen besteht.

6. Verfahren nach einem der vorhergehenden Ansprüche, wobei das Trainieren des Inspektions-Modells auf Basis von automatisch gekennzeichneten Daten und unter Anwendung von Daten bezüglich von Prozess-Anforderungen (R), Vorrichtungs-Grenzen (C) und Modell-Leistungsgrenzen (B) erfolgt.

7. Inspektions-Vorrichtung zur visuellen Inspektion eines Produkts umfassend einen Prozessor und einen Speicher, wobei die Vorrichtung dazu eingerichtet ist, das Verfahren der vorhergehenden Ansprüche auszuführen.

8. Vorrichtung nach dem vorhergehenden Anspruch, wobei ferner ein Erfassungs-Mittel umfasst ist, welches dazu eingerichtet ist, Bilddaten des Produkts für die zumindest eine dritte Datenstruktur bereitzustellen.

9. Vorrichtung nach dem vorhergehenden Anspruch, wobei das Erfassungs-Mittel ein bildgebender Kamera-Sensor ist.

10. Computer-Programm-Produkt, umfassend Befehle, die bei der Ausführung des Programms durch einen Computer diesen veranlassen, das Verfahren/die Verfahrens-Schritte nach einem der vorhergehenden Ansprüche auszuführen.

11. Computerlesbares Speichermedium oder computerlesbarer Datenträger, umfassend Befehle, die bei der Ausführung durch einen Computer diesen veranlassen, das Verfahren oder die Verfahrens- nach einem der vorhergehenden Ansprüche auszuführen.

12. Computerlesbarer Datenträger, auf dem das Computer-Programm-Produkt nach Anspruch 10 gespeichert ist.

13. Datenträgersignal, das das Computer-Programm-Produkt nach Anspruch 10 überträgt.
